# EUROPEAN PATENT APPLICATION

(11) **EP 3 726 051 A1**
(43) Date of publication of application: **21.10.2020**
(21) Application number: 19169874.5
(22) Date of filing: 17.04.2019
(51) Int. Cl.: F03D 80/30

(54) **ELECTRICAL CONNECTION DEVICE FOR A WIND TURBINE, WIND TURBINE AND METHOD FOR PRODUCING AN ELECTRICAL CONNECTION DEVICE**

(71) Applicant: Siemens Gamesa Renewable Energy A/S, 7330 Brande (DK)
(72) Inventor: Hoerning, Kenneth Traelle, 7400 Herning (DK); Jensen, Henrik Abild, 8800 Viborg (DK)
(74) Representative: Aspacher, Karl-Georg

(57) **Abstract**

Electrical connection device (1) for a lightning protection system in a wind turbine (11), the electrical connection device (1) being mountable to a first component of the wind turbine (11) and comprising a sliding connection assembly providing an electrical connection between the electrical connection device (1) and a respective electrical connector (6) of a second component of the wind turbine (11), wherein the first and second components are movable relative to each other, and a spark gap element (5) providing a spark gap (7) between the first and second components, wherein the sliding connection assembly comprises a holder (2) and a sliding connector mounted, in particular spring-loadedly, to the holder (2), wherein the spark gap element (5) is provided as a part of the holder (2).

## Description

The invention concerns an electrical connection device for a lightning protection system in a wind turbine, the electrical connection device being mountable to a first component of the wind turbine and comprising a sliding connection assembly providing an electrical connection between the electrical connection device and a respective electrical connector of a second component of the wind turbine, wherein the first and second components are movable relative to each other, and a spark gap element providing a spark gap between the first and second components, wherein the sliding connection assembly comprises a holder and a sliding connector mounted, in particular spring-loadedly, to the holder. The invention further concerns a method for producing such an electrical connection device and a wind turbine.

Wind turbines, as tall, erect structures, may be subject to lightning strike. For example, the lightning may use a path from a blade through a rotor hub, a nacelle and a tower to the ground. Components of the wind turbine, for example the blade and the rotor hub or the nacelle and the tower, are movable relative to each other, such that they are connected by, for example, a bearing. During a lightning strike, very high lightning currents have to be conducted by the respective components of the wind turbine, which may cause damage, in particular to the mentioned bearings or other connection devices.

To protect these elements of a wind turbine, lightning protection systems have been proposed in the state of the art. Those lightning protection systems usually comprise down-conductors in the blades of the wind turbine themselves and electrical connection devices for pairs of components relatively movable against each other, for example, a respective pitchable blade and the rotor hub, and/or the nacelle and the tower. These electrical connection devices serve to provide an alternate path for the lightning current, in this manner protecting the more damageable parts in the connection area, for example bearings.

Early lightning protection systems used a spark gap element providing a spark gap as a connector in the electrical connection means. During the main discharge of a lightning, where a very strong lightning current flows within a very short period of time, an electric arc is generated in the spark gap due to the strong electrical fields. In the electric arc, due to the low electrical resistance, the lightning current, apart from a small portion, passes through the spark gap and flows to the ground. Such a spark gap, however, provides no protection regarding the lower so-called leaders or leading currents occurring before the actual resistance.

Regarding this problem, in EP 1 561 030 B1, it has been proposed to provide an improved lightning down-conducting arrangement for a wind turbine, in which a sliding contact connection is provided parallel to the spark gap between the lightning down-conductor and the rotor hub, said sliding contact connection ensuring an electrical contact between said lightning down-conductor and said rotor hub irrespective of the pitch angle of the blade, since, in the embodiment described therein, a pitch-controlled wind turbine is discussed. In this manner, a permanent electrical connection can be obtained between the lightning down-conductor of the blade and the rotor hub. Furthermore, upward leaders can be generated from the receptors of the blade or the outer lightning down-conductors with the result that the probability of lightning strike in the receptor or in the outer lightning conductors is optimized. During the actual main discharge, the so-called return stroke, where very strong current flows within a very short period of time, an electric arc is simultaneously generated in the spark gap due to the very strong electrical potential applying after the short-circuiting of the leaders. As a result, the electrical resistance is very weak in the spark gap with the result that the lightning current passes through the spark gap to the ground. As the electrical resistance in the spark gap is much weaker than the contact resistance in the sliding contact connection, only a small non-destructive portion of the lightning current passes through the sliding contact connection.

In an embodiment of EP 1 561 030 B1, the collector shoe and the spark gap member are combined in one contact unit, thereby obtaining a particularly simple and compact structure which is easily maintained or replaced. To achieve this, a contact unit includes a mounting plate, a spark gap member and a collector shoe being mounted on said mounting plate. The collector shoe can be made of a carbon brush or may be shaped as a brush or a spring-loaded shoe and be made of, for example, graphite, bronze, brass or carbon fibre. Usually, such a brush or, in general, sliding connection assembly comprises a holder and a sliding connector mounted to the holder. In many cases, the sliding connector, which may be a brush or shoe, is spring-loaded using a spring of the sliding connection assembly.

In summary, in current lightning protection systems for a wind turbine, a first path to guide the electrical current, in particular from a rotating component to a static component, is provided by a sliding connector, in particular a brush, wherein a second path is provided by a spark gap. The spark gap may, in particular, be produced as a separate blade and mounted, together with the sliding connection assembly, to the mounting plate.

It is an object of the current invention to provide an improved electrical connection device for a lightning protection system in a wind turbine, which is, in particular, easier to handle and more cost-efficient.

This object is achieved in an electrical connection device as initially described by providing the spark gap element as a part of the holder.

In other words, the spark gap element, which may also be named spark gap member, is incorporated in the holder of the sliding connection assembly, such that a mounting plate is no longer needed. In consequence, less parts are required to be mounted to ensure the function of the electrical connection device, in particular the spark gap. According to the state of the art, a spark gap member needed to be mounted to the mounting plate using bolts and washers, which is no longer necessary. Therefore, savings regarding effort and cost are achieved.

Preferably, the spark gap element is an integral part of the holder. In particular, in especially preferred embodiments, the holder and the at least one spark gap element are one moulded piece. In this manner, there is no need to attach or mount the spark gap element to the holder since both elements/members are produced as a single piece, in particular by moulding. For example, a mould can be used which is enhanced such that a piece is formed which incorporates the spark gap element in addition to the usual structural parts of the holder.

Preferably, the holder may comprise a receiving portion for the sliding connector at one side, wherein the receiving portion and thus the sliding connector is flanked by two spark gap elements. That is, in preferred embodiments, a spark gap may be provided on opposing sides of the sliding connector, such that a symmetrical arrangement is provided, wherein, in the case of a lightning current during the main discharge, electrical arcs may be created on both sides of the sliding connector, such that the portion of the lightning current passing through the sliding connector can be further minimized.

In embodiments, the holder also comprises at least one spacer, in particular provided on the connection side and/or between the spark gap element and the sliding connector. Such spacers may prevent the spark gap element from coming into direct contact with the respective electrical connector of the second component of the wind turbine. Such spacers, which are in principle known in the state of the art, may in particular be arranged on a wall section of the holder which is positioned in an area between the spark gap element and the sliding connector. In the preferred case of two spark gap elements flanking the sliding connector, also two spacers may be provided on each respective side of the sliding connector.

Preferably, the sliding connector is a brush, in particular a spring-loaded brush. Alternatively, the sliding connector may also be an electrical shoe or the like.

The invention further concerns a wind turbine, comprising at least one first and at least one second component and a lightning protection system, the lightning protection system comprising at least one electrical connection device according to the current invention for electrical connection of at least one pair of first and second components. All features and remarks regarding the electrical connection device of the lightning protection system correspondingly apply to the wind turbine according to the invention, such that the same advantages can be achieved.

In particular, the pairs of components comprise at least one blade and a rotor hub, usually multiple pairs of blades and the rotor hub. For example, a wind turbine may have three blades rotatably mounted on the rotor hub, wherein each of the blades as second components may comprise an electrical connector and the rotor hub may comprise at least one corresponding electrical connection device. However, the electrical connection device according to the invention may also be applied to other pairs of first and second components, for example a nacelle and a tower.

In a method for producing an electrical connection device according to the current invention, the holder and the at least one spark gap element are moulded as one piece. In this manner, the at least one spark gap element forms an integral part of the holder, such that no attachment means and no attachment step is required and no mounting plate is to be provided.

Further details and advantages of the current invention become apparent from the following description of preferred embodiments taken in conjunction with the drawings, in which:
- Fig. 1: is a perspective view of an electrical connection device according to the invention,
- Fig. 2: shows a cross-sectional view of the electrical connection device in a wind turbine,
- Fig. 3: shows a wind turbine according to the invention, and

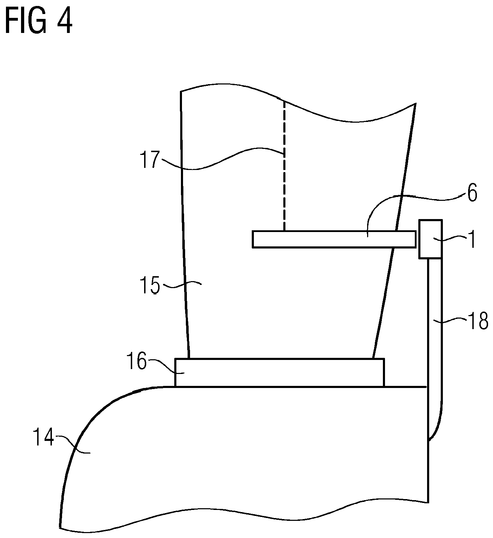

- Fig. 4: shows a detail of a blade and a rotor hub of the wind turbine.

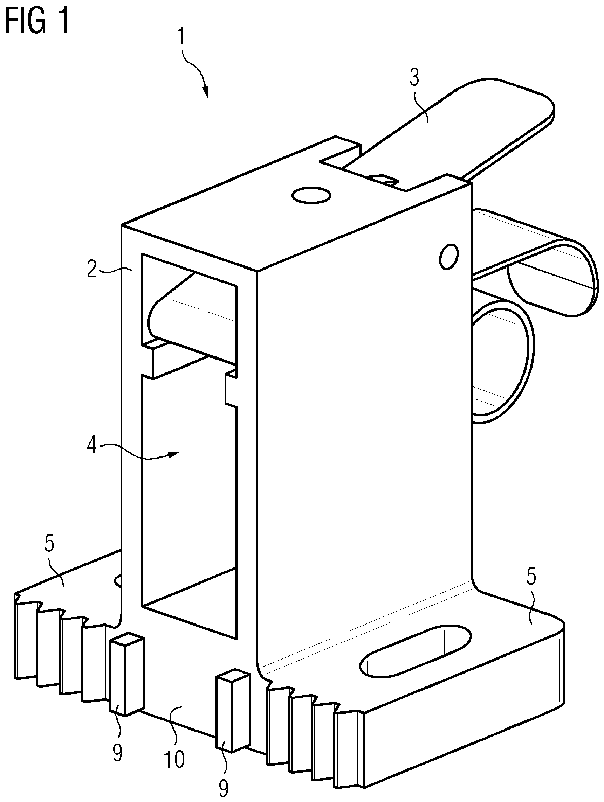

Fig. 1 shows main components of an electrical connection device 1. To provide for a better understanding, the sliding connector, in this case a brush, is not shown in fig. 1.

The electrical connection device 1 comprises a holder 2 made of metal, in this case a brush holder. Installed on the holder 2 is a spring 3 for spring-loading the brush, which is not shown in fig. 1 and is to be inserted into a receiving portion 4 of the holder 2. The holder 2 consists of electrically conducting metal and integrally comprises two spark gap elements 5, one on each side of the receiving portion 4. The holder and the spark gap elements 5 are one integral piece, since they have been moulded using a shared mould. In other words, the spark gap elements 5 are incorporated into the holder 2 such that neither a mounting plate nor any attachment means are required.

The surface of each spark gap element 5 is serrated such that the flux lines around the tips of the spark gap elements 5 are reinforced, facilitating the ignition of an electric arc in the spark gap formed between each spark gap element 5 and the respective electrical connector 6 of a second component of the wind turbine, while the electrical connection device 1 is attached or connected to a first component of the wind turbine.

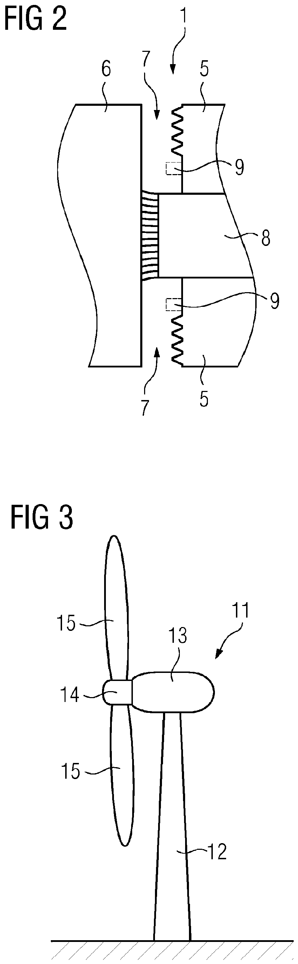

Fig. 2 shows the spark gaps 7 and also the direct, permanent electrically conductive connection between the electrical connector 6 and the electrical connection device 1 established by the brush 8. This direct, permanent electrically conductive connection is established over a range of relative positions by virtue of the spring 3.

Figs. 1 and 2 also show optional spacers 9 preventing direct contact of the spark gap elements 5 with the electrical connector 6. These spacers 9 may, for example, be placed adjacent to the spark gap elements 5 on a wall section 10 of the holder 2.

Fig. 3 shows an exemplary wind turbine 11 according to the current invention. The wind turbine 11 comprises a tower 12 carrying a nacelle 13 to which a rotor hub 14 having, in this case, three blades 15 (of which only two are visible) is mounted. The wind turbine 11 also comprises a lightning protection system employing at least one of the electrical connection devices 1 as explained with respect to figs. 1 and 2. As illustrated regarding the example of the rotor hub 14 as a first component and a blade 15 as a second component, wherein, in this case, the blade 15 is pitchable using a respective pitch device 16, each blade 15 comprises a lightning down-conductor 17 electrically connected to the electrical connector 6. On the other hand, an electrical connection device 1 according to the invention is mounted to the rotor hub 14 using a conductor 18, such that, in case of a lightning strike, currents due to the lightning pass along the lightning down-conductor 17 through the electrical connector 6, the electrical connection device 1 and the conductor 18 into the rotor hub 14, bypassing the pitching device 16, in particular its bearing elements.

It is noted that, in another embodiment, the electrical connection device 1 may also be mounted to the blade 15. Further, additional electrical connection devices 1 as described with respect to figs. 1 and 2 may also be used in the wind turbine 11, for example regarding the tower 12 and the nacelle 13 as pair of first and second components.

Although the present invention has been described in detail with reference to the preferred embodiment, the present invention is not limited by the disclosed examples from which the skilled person is able to derive other variations without departing from the scope of the invention.

## Claims

1. Electrical connection device (1) for a lightning protection system in a wind turbine (11), the electrical connection device (1) being mountable to a first component of the wind turbine (11) and comprising a sliding connection assembly providing an electrical connection between the electrical connection device (1) and a respective electrical connector (6) of a second component of the wind turbine (11), wherein the first and second components are movable relative to each other, and a spark gap element (5) providing a spark gap (7) between the first and second components, wherein the sliding connection assembly comprises a holder (2) and a sliding connector mounted, in particular spring-loadedly, to the holder (2),
**characterised in that** the spark gap element (5) is provided as a part of the holder (2).

2. Electrical connection device according to claim 1, **characterised in that** the spark gap element (5) is an integral part of the holder (2).

3. Electrical connection device according to claim 1 or 2, **characterised in that** the holder (2) and the spark gap element (5) are one moulded piece.

4. Electrical connection device according to one of the preceding claims, **characterised in that** the holder (2) comprises a receiving portion (4) for the sliding connector at one side, wherein the receiving portion (4) and thus the sliding connector is flanked by two spark gap elements (5).

5. Electrical connection device according to one of the preceding claims, **characterized in that** the holder (2) also comprises at least one spacer (9), in particular provided on the connection side and/or between the spark gap element (5) and the sliding connector.

6. Electrical connection device according to one of the preceding claims, **characterised in that** the sliding connector is a brush (8).

7. Wind turbine (11), comprising at least one first and at least one second component and a lightning protection system, the lightning protection system comprising at least one an electrical connection device (1) according to one of the preceding claims for electrical connection of at least one pair of first and second components.

8. Wind turbine according to claim 7, **characterised in that** the pairs of components comprise at least one blade (15) and a rotor hub (14), and/or a nacelle (13) and a tower (12).

9. Method for producing an electrical connection device (1) according to any of the claims 1 to 6, wherein the holder (2) and the at least one spark gap element (5) are moulded as one piece.
